# EUROPÄISCHE PATENTSCHRIFT

(11) **EP 1 250 835 B1**
(45) Veröffentlichungstag und Bekanntmachung des Hinweises auf die Patenterteilung: **05.04.2006**
(21) Anmeldenummer: 02008173.3
(22) Anmeldetag: 16.04.2002
(51) Int. Cl.: A01G 9/14, A01G 9/24

(54) **Gewächshaus**
Greenhouse
Serre

(30) Priorität: 17.04.2001 DE 20106629 U; 05.06.2001 DE 20109261 U
(43) Veröffentlichungstag der Anmeldung: 23.10.2002
(73) Patentinhaber: Stefan, Robert, 94501 Aldersbach (DE)
(72) Erfinder: Stefan, Robert, 94501 Aldersbach (DE)
(74) Vertreter: Strasse, Joachim

(56) Entgegenhaltungen:
- EP-A- 0 145 508
- DE-A- 3 022 167
- FR-A- 2 488 102
- FR-A- 2 522 247
- GB-A- 1 113 577
- NL-C- 1 001 501

## Beschreibung

Die vorliegende Erfindung betrifft ein Gewächshaus mit einem öffnungsfähigen hängenden Foliendach. Ein Gewächshaus ist normalerweise ein künstlich erwärmtes Glashaus, um Pflanzen wie Blumen, Zierpflanzen, Gemüse unabhängig von den klimatischen Verhältnissen an- und aufzuziehen. Gewächshäuser sind meist mit Lüftung und gelegentlich mit Zusatzbeleuchtung und Beregnungsanlagen ausgestattet.

Kostengünstiger ist es, statt mit Glas ein Gewächshaus mit Folien einzudecken. Die Flexibilität der Folie ermöglicht es, das Dach aufzufalten, um bei geeigneter Witterung die Pflanzen der natürlichen Sonneneinstrahlung auszusetzen. Die hierfür bekannten Vorrichtungen zum Öffnen oder Schließen sind jedoch umständlich und kostspielig und das Öffnen und Schließen ist oft zeitraubend. So ist in der Deutschen Patentschrift 22 23 158 ein Gewächshaus mit einem öffnungsfähigen hängenden Dach aus aufblasbaren Schlauchfolien beschrieben, die parallel an gespannten Drähten aufgehängt sind. Werden die Schläuche mit Luft gefüllt, so berühren sie sich an den parallelen Tangentiallinien und bilden dort, da sie tiefer liegen, Einbruchstellen für Regenwasser. Außerdem behindert die Luftfüllung das Durchdringen von Licht- und UV Strahlen auf die Gewächshauspflanzen und durch die Luftfüllung wird es zu Kondensatbildungen kommen.

Eine andere hängende Foliendachkonstruktion gemäß Deutscher Patentschrift 32 04 026 ist an einer Drahtseilkonstruktion aufgehängt und lässt sich daran zickzackförmig falten. Auch bei dieser Konstruktion ist die Folienhaut mehrschichtig und zwischen den Schichten befinden sich Luftpolster und eine weitere untergehängte Folie ist lüftdurchlässig, um dem der Feuchtigkeit bei geschlossenem Zustand Herr zu werden. Beim Bewegen der vielschichtigen Folien und bei starkem Regen oder gar Schnee ist diese Eindeckung mechanisch unsicher.

Aus der Französischen offenlegungsschrift 2 488 102 ist eine einfache Aufhängung einer einschichtigen Folie zwischen zwei Pfosten als Abdeckung für ein Gewächshaus bekannt, das zwar einen beschwerten hängenden First aufweist, aber keine Öffnungsmechanik kennt. Lediglich an Zwischenpfosten kann die Lage der Folie zur Einstrahlungsrichtung geändert werden.

Die Französische Offenlegungsschrift 2 137 124 beschreibt ein Gewächshaus mit einem hängenden öffnungsfähigen Faltdach, das jedoch aus mehreren unten gelenkig verbundenen Rahmen besteht, die im geschlossenen Zustand auf schräg verlaufende gespannte Seilen abgelegt werden. Jedes Einzelne Gelenk besteht aus zwei Gelenken im Abstand zueinander, zwischen den eine Dachrinne verläuft. Die Stützseile verlaufen oben über eine Reihe von vielen Stützen. Die den Gelenken gegenüberliegenden Seiten der Rahmen, welche im geöffneten Zustand senkrecht stehen, sind mit wechselseitig mit hin- und herbewegbaren Seilzügen verbunden, welche durch notwendigerweise hochgestellte Rollen geführt sind, um die Klappbewegung der Rahmen zwischen einer hochstehenden Offenstellung und einer etwa 45 Grad - Ablage auf den Spannseilen zu steuern. Der konstruktive Aufwand ist groß, denn die Tragkonstruktion ist aufwendig und befindet sich weder unter noch über dem Dach, sondern in der Bewegungsebene des Daches. Die Abschattung der Pflanzen ist sowohl im offenen, wie im geschlossenen Zustand ebenfalls groß.

Die NL-C-1001501 beschreibt ein Foliendach, bei dem sich auf einem Satteldachbinder in Traufrichtung vom First aus parallel zu Sparren und an diesen aufgehängt nach unten gewölbte Folienfelder augeordnet sind.

Mit der vorliegenden Erfindung wird demgegenüber ein Folien - Gewächshaus vorgeschlagen, dessen Dach sich leicht öffnen und schließen und gegebenenfalls in verschiedene Zwischenpositionen bringen lässt. Dies geschieht erfindungsgemäß zunächst dadurch, dass die das Dach bildende Folienfläche in jeder Stellung unterhalb einem leichten, aber stabilen Tragwerk verbleibt an dem es aufgehängt ist. Auch in der völlig geschlossenen Stellung hängt die Folienhaut nach unten durch. Gebildet wird ein straffer Dreiecksquerschnitt als ein nach unten gerichtetes, hängendes Satteldach welches in zwei Aufhängungslinien an dem Tragwerk angebracht ist. Der nach unten gerichtete "First", also die am weitesten nach unten durchhängende Mittellinie zwischen zwei Aufhängungslinien hat hierbei in der Längsachse des Gewächshauses ein Gefälle, damit Regenwasser in Längsrichtung abfließen kann und ist, um die Folie straff zuhalten, beschwert. Bevorzugt wird hierfür ein auf der Längsmittelachse aufliegendes Rohr, das mit einem Klemmprofil mit der Folie verbunden ist. Es kann aber auch eine Stange oder ähnliches verwendet werden. Wesentlich ist ein ausgewogenes Gewicht dieser Mittelachsenbeschwerung, was einerseits für eine genügende Straffung sorgt, andererseits die Leichtigkeit des Dachaufbaus nicht stört.

Die Aufhängungslinien sind an dem Tragwerk quer zur Gewächshausachse ohne Gelenke und weitere Abstützungen aufeinander zu- und von einander weg- bis in eine beliebige seitliche Endstellung beweglich. Dadurch öffnet oder schließt sich das Foliendach mehr oder weniger oder ganz, wobei die Dachfolie mehr oder weniger in das Gewächshaus oder längs einer Seitenwand hineinhängt und das volle Tages- oder Sonnenlicht in das Gewächshaus lässt. Treffen die beiden Aufhängelinien an dem Tragwerk in dessen Mitte zusammen, hängt die Folienfläche eng zusammen und das Dach ist geöffnet. Dieser "Foliensack" mit seinem unten liegenden Rohr, kann auch zur völligen Öffnung des Daches nach oben um das Rohr aufgewickelt werden.

Der wesentliche Unterschied zu den bekannten hängenden Foliendächern besteht darin, dass die Dachhaut nicht nur ständig gespannt offen oder geschlossen nach unten durchhängt, sondern auch gegen Wind, Regen und Schnee sicher ist.

Weitere Einzelheiten, Merkmale und Vorteile ergeben sich aus den Ansprüchen und der folgenden Beschreibung eines in der Zeichnung schematisch und perspektivisch dargestellten Ausführungsbeispiels.

Es zeigen:

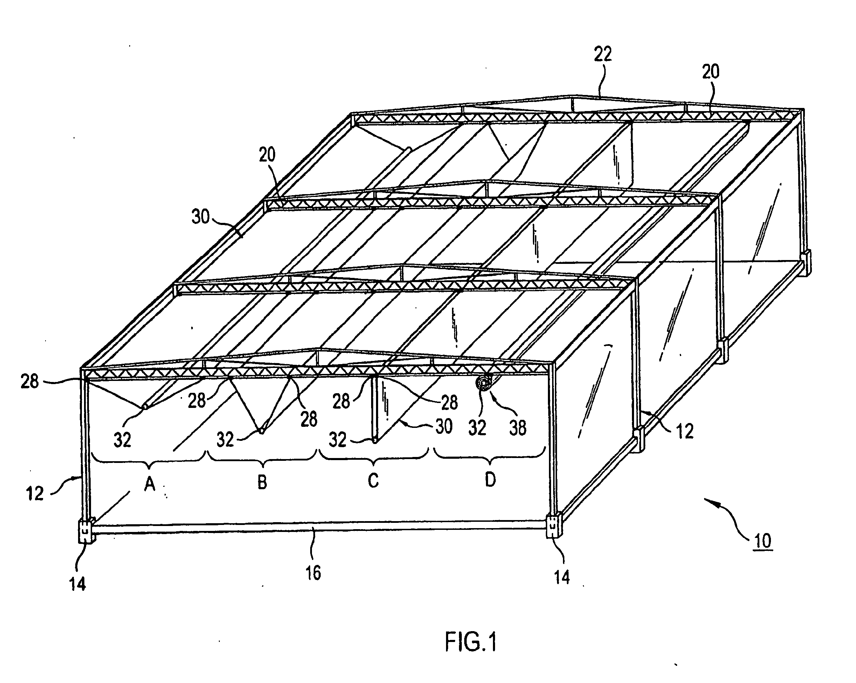

Fig. 1 eine schematische perspektivische Übersicht,
Fig. 2 im schematischen Detail, wie sich Foliendach und Rohr verbunden lassen und
Fig.3 als weiteres Detail die geschlossene Verbindung von Folie und Rohr.

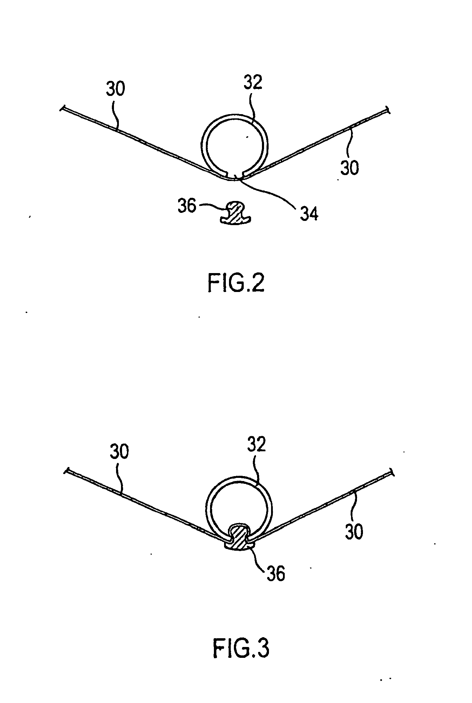

Das beispielhaft dargestellte Foliengewächshaus 10 besteht aus mehreren nebeneinander liegenden Feldern A, B, C und D. Jedes Feld dieses Ausführungsbeispiels kann auch als ein eigenes Foliengewächshaus mit eigenen Seitenwänden betrachtet werden. Wie üblich, sind Stützen 12 auf Fundamenten 14 über einem Boden 16 aufgerichtet und tragen jeweils einen mit oberer Verspannung 22 versehenen leichten Gitterträger 20 als Tragwerk. An Gitterträgern 20 zu diesen quer und zum Gewächshaus 10 axial ausgerichteten Schienen 28 befinden sich als Aufhängungslinien für eine zwischen ihnen aufgehängte Folienbahn 30 als hängende Dachhaut. Als Beispiel ist im Feld A das Foliendach geschlossen und die Schienen 28 befinden sich in ihren äußerten von einander entfernten Positionen innerhalb des Feldes A. Die Folienbahn 30 hängt mit einem ihrer Mittellinie angeordnetem Rohr 32 in der geschlossenen Stellung leicht nach unten durch. Mit dem eingelegten Rohr 32 wird die Folienbahn straff gehalten und ein Flattern vermieden. Um sicher zu verhindern, dass das geschlossene Dach bei Wind oder Sturm nicht nach oben gesaugt wird, kann eine nicht eingezeichnete Sicherung beispielsweise in Form eines unten verankerbares Zugseiles eingezogen werden. Zum Verbinden von Folie 30 und Rohr 32 kann gemäß Figur 2 und 3 Rohr 32 eine sich längs erstreckende Kerbe 34 aufweisen in welche ein Klemmprofil 36 passt und zwischen Kerbe 36 wird die Folie 30 eingeklemmt. Statt des Rohres 32 kann auch eine Stange oder ähnliches mit der Folie verbunden werden, um diese straff zu halten. In jedem Fall hat diese innere Firstlinie ein Gefälle in der Längsrichtung des Gewächshauses 10 nach hinten. Zum Auffangen des Regenwassers kann an der Rückwand eine querverlaufende Auffangrinne angebracht sein.

Im Feld B ist beispielhaft dargestellt, wie das Dach halb geöffnet ist. Die Schienen 28 bewegen sich mit ihrer Längserstreckung aufeinander zu. Das Feld C zeigt beispielhaft eine zunächst geöffnete Stellung in der die Foliebahnen 30 nahezu aufeinander liegen. Dieser im Feld C dargestellte Foliensack 30, wird wie im Feld D dargestellt um das Rohr 32 nach oben bis an die Unterseite des Gitterträgers 20 zu einer Rolle 38 aufgewickelt. Für einen Wickelmechanismus lässt sich das Rohr 32 axial etwas verlängern. Die Bewegung auf den Schienen 28 mit der Aufhängung der Folie ist aber nicht auf die einzelnen Felder beschränkt. Vielmehr lassen sich die Foliensäcke 30 aller Felder hängend oder aufgerollt seitlich zusammenschieben.

Selbstverständlich lässt sich ein Gewächshaus 10 mit beliebig vielen Feldern A, B, ... aufbauen und die Dachstellungen können überall gleich oder unterschiedlich sein. Ferner lässt sich diese Dachgestaltung mechanisieren und automatisieren. Hier ist lediglich das Prinzip der Variabilität eines durchhängenden Daches beschrieben. Wichtig ist jedoch die Kombination mit der an sich bekannten Ausbildung von Leichtmetall Gitteträgern 20,22.

## Patentansprüche

1. Gewächshaus (10) mit einem hängenden öffnungsfähigen Foliendach an einem auf Stützen (12) aufgestellten Tragwerk, **dadurch gekennzeichnet, dass** das Foliendach von einer Folienhaut (30) gebildet wird, die in jeder Stellung vollständig unterhalb des aus Gitterträgem (20) gebildeten Tragwerks verbleibt, an dem sie an Schienen (28) die auf der Unterseite der Gitterträger (20) angeordnet sind, längs zu diesen zwischen einer Offen- und einer Geschlossenstellung beweglich aufgehängt ist.

2. Gewächshaus (10) nach Anspruch 1, **dadurch gekennzeichnet, dass** die Folienhaut (30) an den Schienen (28) an Aufhängungslinien quer zur Längsachse des Gewächshauses beweglich angebracht ist und einen Durchhang mit einem Dreiecksquerschnitt als ein nach unten gerichtetes, hängendes Dach mit beschwertem First bildet.

3. Gewächshaus (10) nach Anspruch 2, **dadurch gekennzeichnet, dass** der nach unten gerichtete First, der die am weitesten nach unten durchhängende Mittellinie der Folienhaut (30) zwischen zwei Aufhängungslinien bildet, in der Längsachse des Gewächshauses ein Gefälle hat.

4. Gewächshaus (10) nach Anspruch 2 oder 3, **dadurch gekennzeichnet, dass** der nach unten durchhängende First der Folienhaut (30) in der Längsachse des Gewächshauses mit einem Rohr (32) beschwert ist.

5. Gewächshaus (10) nach einem der Ansprüche 2 bis 4, **dadurch gekennzeichnet, dass** die Aufhängungslinien der Folienhaut (30) an einem Tragwerk (20) quer zur Gewächshauslängsachse aufeinander zu- und bis in eine oder zwei seitliche Endstellungen beweglich sind.

6. Gewächshaus (10) nach einem der Ansprüche 4 oder 5, **dadurch gekennzeichnet, dass** sich die vollständig nach innen durchhängende Folienhaut (30) bis unter das Tragwerk (20) um das Rohr (32) zusammenrollen lässt.

7. Gewächshaus (10) nach einem der Ansprüche 1 bis 6 **dadurch gekennzeichnet, dass** eine Windsicherung in Form eines unten verankerbaren Zugseiles eingezogen ist, um zu verhindern, dass das geschlossene Dach bei Wind oder Sturm nach oben gesaugt wird.

8. Gewächshaus (10) nach einem der Ansprüche 4 bis 7, **dadurch gekennzeichnet, dass** das Rohr (32) eine Längskerbe (34) aufweist, in die ein Klemmprofil (36) passt, wobei die Folienhaut (30) zwischen Kerbe (34) und Klemmprofil (36) eingeklemmt ist.

9. Gewächshaus (10) nach einem der Ansprüche 1 bis 8, **dadurch gekennzeichnet, dass** die Breitseite des Gewächshauses (10) in Felder (A, B, C, D...) aufgeteilt ist, denen je eine Folienbahn zugeordnet ist.

## Revendications

1. Serre (10) avec un toit ouvrable en film suspendu sur une structure porteuse montée sur des supports, **caractérisée en ce que** le toit en film est formé par une pellicule en film (30) qui dans toutes les positions reste entièrement sous la structure porteuse formée de supports en treillis (20), à laquelle elle est fixée de façon mobile entre une position d'ouverture et de fermeture sur des rails (28) qui sont disposés sur la face inférieure du support en treillis (20), le long de ces derniers.

2. Serre (10) selon la revendication 1, **caractérisée en ce que** la pellicule en film (30) est montée de façon amovible sur les rails (28), sur des lignes de suspension, à la transversale de l'axe longitudinal de la serre et **en ce qu'**elle forme une flèche avec une section transversale triangulaire, ayant la forme d'un toit suspendu, dirigé vers le bas, avec un faîtage lesté.

3. Serre (10) selon la revendication 2, **caractérisée en ce que** le faîtage dirigé vers le bas, qui forme la ligne médiane la plus infléchie vers le bas de la pellicule en film (30) entre deux lignes de suspension comporte une pente dans l'axe longitudinal de la serre.

4. Serre (10) selon la revendication 2 ou 3, **caractérisée en ce que** le faîtage infléchi vers le bas de la pellicule en film (30) est lesté d'un tube (32) dans l'axe longitudinal de la serre.

5. Serre (10) selon l'une quelconque des revendications 2 à 4, **caractérisée en ce que** les lignes de suspension de la pellicule en film (30) sont mobiles l'une vers l'autre et jusqu'à l'atteinte d'une ou de deux positions finales latérales sur une structure porteuse (20), à la transversale de l'axe longitudinal de la serre.

6. Serre (10) selon l'une quelconque des revendications 4 ou 6, **caractérisée en ce que** la pellicule en film (30) entièrement infléchie vers l'intérieur est enroulable autour du tube (32), jusque sous la structure porteuse (20).

7. Serre (10) selon l'une quelconque des revendications 1 à 6, **caractérisée en ce qu'**une sécurité contre le vent, présentant la forme d'un câble de traction pouvant être ancré est insérée, pour éviter que le toit fermé ne soit aspiré vers le haut, en cas de vent ou de tempête.

8. Serre (10) selon l'une quelconque des revendications 4 à 7, **caractérisée en ce que** le tube (32) comporte une entaille longitudinale (34) dans laquelle rentre un profilé de serrage (36), la pellicule en film (30) étant serrée entre l'entaille (34) et la profilé de serrage (36).

9. Serre (10) selon l'une quelconque des revendications 1 à 8, **caractérisé en ce que** côté large de la serre (10) est divisé en zones (A, B, C, D), auxquelles une bande de film est respectivement associée.

## Claims

1. A greenhouse (10) with a suspended, openable roof film on a supporting framework mounted on supports (12), **characterised in that** the roof film is formed by a film skin (30) which in every position remains in its entirety below the supporting framework made up of lattice girders (20), on which it is suspended on rails (28) which are arranged on the underside of the lattice girders (20) and is displaceable longitudinally thereto between an open and a closed position.

2. The greenhouse (10) according to claim 1, **characterised in that** the film skin (30) is attached to the rails (28) and is displaceable on suspension lines transversely to the longitudinal axis of the greenhouse and forms a sagging portion with a triangular cross-section as a downwardly oriented suspended roof with a weighted ridge.

3. The greenhouse (10) according to claim 2, **characterised in that** the downwardly oriented ridge which forms the centre line of the film skin (30) sagging furthest downwards between two suspension lines, is inclined along the longitudinal axis of the greenhouse.

4. The greenhouse (10) according to claim 2 or 3, **characterised in that** the downwardly sagging ridge of the film skin (30) is weighted with a tube (32) along the longitudinal axis of the greenhouse.

5. The greenhouse (10) according to any one of claims 2 to 4, **characterised in that** the suspension lines of the film skin (30) are displaceable toward one another on a supporting framework (20), transversely to the longitudinal axis of the greenhouse and as far as one or two lateral end positions.

6. The greenhouse (10) according to either claim 4 or 5, **characterised in that** the film skin (30), all of which sags inwardly, can be rolled up around the tube (32) as far as beneath the supporting framework (20).

7. The greenhouse (10) according to any one of claims 1 to 6, **characterised in that** a means for securing against the wind, in the form of a traction cable which may be anchored underneath, is retracted in order to prevent the closed roof from being sucked upwards during windy or stormy conditions.

8. The greenhouse (10) according to any one of claims 4 to 7, **characterised in that** the tube (32) has a longitudinal slot (34) into which a clamping section (36) fits, the film skin (30) being clamped between the slot (34) and the clamping section (36).

9. The greenhouse (10) according to any one of claims 1 to 8, **characterised in that** the greenhouse (10) is divided into sections (A, B, C, D, etc.) along its width, to each of which a film web is assigned.
